# EUROPÄISCHE PATENTSCHRIFT

(11) **EP 0 963 385 B1**
(45) Veröffentlichungstag und Bekanntmachung des Hinweises auf die Patenterteilung: **16.06.2004**
(21) Anmeldenummer: 98910674.5
(22) Anmeldetag: 23.02.1998
(51) Int. Cl.: C08F 10/02, C08F 4/70

(54) **KATALYSATORZUSAMMENSETZUNG**
CATALYST COMPOSITION
COMPOSITION DE CATALYSEUR

(30) Priorität: 24.02.1997 DE 19707236
(43) Veröffentlichungstag der Anmeldung: 15.12.1999
(73) Patentinhaber: Basell Polyolefine GmbH, 50389 Wesseling (DE)
(72) Erfinder: MECKING, Stefan, D-63067 Offenbach (DE)
(86) Internationale Anmeldenummer: PCT/EP1998/000857
(87) Internationale Veröffentlichungsnummer: WO 1998/038228

(56) Entgegenhaltungen:
- EP-A- 0 009 160
- EP-A- 0 114 434
- EP-A- 0 768 319
- WO-A-97/48735
- US-A- 3 725 379
- DENGER C ET AL: "SIMULTANEOUS OLIGOMERIZATION AND POLYMERIZATION OF ETHYLENE" MAKROMOLEKULARE CHEMIE, RAPID COMMUNICATIONS, Bd. 12, Nr. 12, 1.Dezember 1991, Seiten 697-701, XP000244213
- DATABASE WPI Section Ch, Week 9413 Derwent Publications Ltd., London, GB; Class A17, AN 94-107675 XP002041261 & SU 1 455 650 A (KRENTSEL B A)
- KAZUO SOGA ET AL: "POLYMERIZATION OF OLEFINS WITH NOBLE METAL (RU, RH, PD) COMPOUNDS ACTIVATED BY ALKYLALUMINIUM OR ALKYLTITANIUM COMPOUNDS" MAKROMOLEKULARE CHEMIE, RAPID COMMUNICATIONS, Bd. 11, Nr. 6, 1.Juni 1990, Seiten 285-291, XP000141771

## Beschreibung

Die vorliegende Erfindung bezieht sich auf eine Katalysatorzusammensetzung, enthaltend einen Polymerisationskatalysator auf Basis einer frühen Übergangsmetallkomponente und einen Polymerisationskatalysator auf Basis einer späten Übergangsmetallkomponente.

Die Verwendung von Katalysatoren des Ziegler-Typs oder des Metallocen-Typs für die Polymerisation von unpolaren Olefinen wie Ethylen und Propylen, ist bekannt. Üblicherweise bestehen solche Katalysatoren aus einer frühen Übergangsmetallverbindung, zum Beispiel einer halogenidhaltigen Titan- oder Zirkonverbindung, in Kombination mit einem Überschuß eines Cokatalysators, zum Beispiel einer Aluminium-Verbindung. In jüngerer Zeit ist die Aktivierung von geeigneten Übergangsmetallverbindungen mit stöchiometrischen Mengen eines Cokatalysators, wie einem [Ph₃C]⁺ or [Me₂NPh]⁺ Salz eines nicht-koordinierenden Anions, beschrieben worden.

Die Verwendung von Katalysatorzusammensetzungen, welche zwei oder mehrere unterschiedliche der Olefinpolymerisations-Katalysatoren des Ziegler-Typs oder des Metallocenen-Typs enthalten ist bekannt. Zum Beispiel kann die Kombination zweier Katalysatoren verwendet werden, von denen der eine ein Polyethylen von unterschiedlicher mittlerer Molmasse erzeugt als der andere, zur Darstellung von Reaktorblends mit breiten Molekulargewichtsverteilungen (WO 95/11264). Die erhaltenen Polymerblends können verbesserte Verarbeitungs- und Gebrauchseigenschaften besitzen.

Die Zugabe von Metallkomponenten, unter anderem auch später Übergangsmetalle, zu Olefin-Polymerisationskatalysatoren auf Basis früher Übergangsmetalle, zur Erhöhung der Aktivität oder Stabilität der letzteren Katalysatoren ist vielfach beschreiben worden (Herrmann, C.; Streck, R.; Angew. Makromol. Chem. 94 (1981) 91-104).

Die Synthese von verzweigten Polymeren aus Ethylen ohne Verwendung eines Comonomers mit bimetallischen Katalysatoren, in welchen ein Katalysator einen Teil des Ethylens oligomerisiert; und der andere die so gebildeten Oligomere mit Ethylen copolymerisiert, ist beschrieben worden (Beach, David L.; Kissin, Yury V.; J. Polym. Sci., Polym. Chem. Ed. (1984), 22, 3027 - 42. Ostoja-Starzewski, K. A.; Witte, J.; Reichert, K. H., Vasiliou, G. in Transition Metals and Organometallics as Catalysts for Olefin Polymerization. Kaminsky, W.; Sinn, H. (Hrsg.); Springer-Verlag; Heidelberg; 1988; S. 349 - 360). Letztere Literaturstelle beschreibt z. B. die Verwendung eines nickelhaltigen Oligomerisierungskatalysators in Kombination mit einem chromhaltigen Polymerisationskatalysator.

Macromol. Chem. Rapid. Commun. 12, 697 - 702 (1991) beschreibt eine Katalysatorzusammensetzung auf Basis einer (a) Zirconocenkomponente und (b) eines Nickelchelat-Komplexes. SU-A-1455650 (Derwent Abstract) beschreibt eine Katalysatorzusammensetzung auf Basis einer (a) Titanocenkomponente und (b) einer Alkylidennickel-Verbindung. Macromol. Chem. Rapid. Commun. 11, 285 - 291 (1990) offenbart eine Katalysatorzusammensetzung auf Basis einer (a) Titanocenkomponente und (b) Palladium- und Ruthenium-Verbindungen. EP-A-114434 betrifft Katalysatorzusammensetzungen zur Polymerisation von Ethylen auf Basis von (a) Titan- und VanadiumVerbindungen und (b) halogenfreien Nickel-Verbindungen. US-A-3725379 beschreibt Katalysatorzusammensetzungen für die Polymerisation von Ethen und Propen auf Basis eines (a) Molybdänkomplexes und (b) einer Nickel-Verbindung. EP-A-009160 betrifft Katalysatorzusammensetzungen zur Polymerisation von Ethen auf Basis einer (a) Titan-Verbindung und (b) einer Nickel-Verbindung.

Die Aufgabe der vorliegenden Erfindung bestand darin, eine Katalysatorzusammensetzung zur Verfügung zu stellen, welche sich zur Herstellung von Polyolefin-Blends eignet, welche aus mindestens zwei verschiedenen Polyolefinen besteht.

Überraschend wurde gefunden, daß diese Aufgabe gelöst werden kann durch eine spezielle Katalysatorzusammensetzung.

Gegenstand der vorliegenden Erfindung ist somit eine Katalysatorzusammensetzung enthaltend mindestens zwei verschiedene Polymerisationskatalysatoren, von denen a) mindestens einer ein Polymerisationskatalysator auf Basis einer frühen Übergangsmetallkomponente ist, wobei das frühe Übergangsmetall ein Metall der Gruppen IIIA bis VIIA des Periodensystems der Elemente oder ein Metall der Gruppe der Lanthanoiden ist und b) mindestens einer ein Polymerisationskatalysator auf Basis einer späten Übergangsmetallkomponente ist, enthaltend ausschliesslich oder in Kombination mit anderen Liganden, solche Liganden, welche über mehr als zwei Atome chelatisiert an das Metall koordinieren und wobei das späte Übergangsmetall ein Metall der Gruppen VIIIA und IB des Periodensystems der Elemente ist.

Gegenstand der Erfindung ist ferner ein verfahren zur Polymerisation von Olefinen in Gegenwart der erfindungsgemäßen Katalysatorzusammensetzung. Ein bevorzugter Gegenstand der Erfindung ist ein Verfahren zur Homopolymerisation von Ethylen durch die erfindungsgemäße Katalysatorzusammensetzung, wobei besonders bevorzugt ein Blend von Polyethylenen mit voneinander verschiedener Verzweigungsstruktur erhalten wird.

Die Formulierungen "Oligomerisierung" und "Oligomer" beziehen sich auf Produkte oder Produktgemische, welche sich im Zahlenmittel (Mₙ) aus weniger als 400 Monomereinheiten zusammensetzen. Die Formulierungen "Polymerisation" und "Polymer" bzw. "Polyolefin" beziehen sich auf Produkte oder Produktgemische, welche sich im Zahlenmittel (Mₙ) aus mehr als 400, vorzugsweise mehr als 1000 Monomereinheiten zusammensetzen. Der Begriff "Polymerisationskatalysator" bezeichnet Katalysatoren, welche sich zur Herstellung von Polymeren bzw. Polyolefinen eignen, d. h. zur Herstellung von Produkten oder Produktgemischen, welche sich im Zahlenmittel aus mehr als 400 Monomereinheiten, vorzugsweise mehr als 1000 Monomereinheiten zusammensetzen. Die erfindungsgemäße Katalysatorzusammensetzung enthält a) mindestens einen Polymerisationskatalysator auf Basis einer frühen Übergangsmetallkomponente, wobei das frühe Übergangsmetall ein Metall der Gruppen IIIA bis VIIA des Periodensystems der Elemente oder ein Metall der Gruppe der Lanthanoiden ist und b) mindestens einen Polymerisationskatalysator auf Basis einer späten Übergangsmetallkomponente, enthaltend ausschliesslich oder in Kombination mit anderen Liganden, solche Liganden, welche über mehr als zwei Atome chelatisiert an das Metall koordinieren und wobei das späte Übergangsmetall ein Metall der Gruppen VIIIA und IB des Periodensystems der Elemente ist, von denen jede zur Bildung eines anderen Polymers bzw. Polyolefins führt. Jede Übergangsrnetallkomponente enthält jeweils genau ein Übergangemetall.

Als Katalysatorkomponente auf Basis eines frühen Übergangsmetalles enthält die erfindungsgemäße Katalysatorzusammensetzung bevorzugt sogenannte Ziegler-Katalysatorkomponenten (wie z. B. beschrieben in Falbe, J.; Regitz, M. (Hrsg.); Römpp Chemie Lexikon; 9. Aufl.; Thieme; 1992; New York; Bd. 6, S. 5128 - 5129) und/oder Metallocen-Katalysatorkomponenten. Besonders bevorzugt sind Metallocen-Katalysatorkomponenten.

Bei der Ziegler-Katalysatorkomponente handelt es sich bevorzugt um eine Verbindung eines Metalls der Gruppe IVA, (z. B. Titan, Zirkonium oder Hafnium), VA (z. B. Vanadium oder Niob) oder VIA (z. B. Chrom oder Molybdän) des Periodensystems der Elemente. Bevorzugt sind Halogenide, Oxide, Oxyhalogenide, Hydroxide oder Alkoxide. Exemplarische aber nicht limitierende Beispiele für Ziegler-Katalysatorkomponenten sind: Titantetrachlorid, Zirkontetrachlorid, Hafniumtetrachlorid, Titantrichlorid, Vanadiumtrichlorid, Vanadiumoxychlorid, Chromtrichlorid oder Chromoxid.

Als Metallocen-Katalysatorkomponenten werden z. B. Cyclopentadienylkomplexe verstanden. Bevorzugt sind Cyclopentadienylkomplexe von Metallen der Gruppe IIIA und der Gruppe der Lanthanoide (z. B. Lanthan oder Yttrium), sowie Metalle der Gruppe IVa (z. B. Titan, Zirkonium oder Hafnium), VA (z. B. Vanadium oder Niob) oder VIA des Periodensystems der Elemente (z. B. Chrom oder Molybdän), besonders bevorzugt sind Cyclopentadienylkomplexe von Titan, Zirkonium oder Hafnium. Die Cyclopentadienylkomplexe können z. B. verbrückte oder unverbrückte Biscyclopentadienylkomplexe sein, wie sie z. B. in EP 129 368, EP 561 479, EP 545 304 und EP 576 970 beschrieben sind, Monocyclopentadienylkomplexe, wie verbrückte Amidocyclopentadienylkomplexe die z. B. in EP 416 815 beschrieben sind, mehrkernige Cyclopentadienylkomplexe wie in EP 632 063 beschrieben, pi-Ligand substituierte Tetrahydropentalene wie in EP 659 758 beschrieben oder pi-Ligand substituierte Tetrahydroindene wie in EP 661 300 beschrieben.

Bevorzugte Metallocen-Katalysatorkomponenten sind unverbrückte oder verbrückte Mecallocenverbindungen der Formel I, 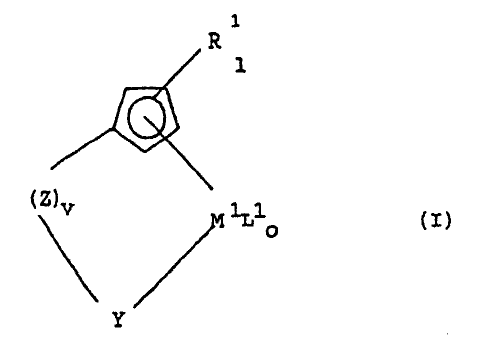 worin
- M¹: ein Metall der Gruppe IIIA, IVA, VA oder VIA des Periodensystems der Elemente ist, insbesondere Ti, Zr oder Hf,
- R¹: gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder R¹ sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluorhaltiges C₇ C₃₀-Alkylaryl oder C₁-C₁₂-Alkoxy ist, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- l: gleich 5 für v = 0, und l gleich 4 für v = 1 ist,
- Y: entweder
a) ein Element der V. (z. B. Stickstoff oder Phosphor) oder VI. (z.B. Sauerstoff oder Schwefel) Hauptgruppe des Periodensystems der Elemente ist, welches einen oder zwei C₁-C₂₀-Kohlenwasserstoffsubstituenten wie C₁-C₁₀-Alkyl oder C₆-C₂₀-Aryl trägt, oder
b) 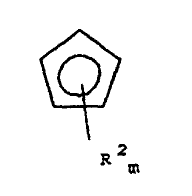 ist, worin

R² gleich oder verschieden sind und ein Wasserstoffatom oder SiR₃³ sind, worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₁₄-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₉-C₄₀-Arylalkenyl sind, oder R² sind eine C₁-C₃₀ - kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆ C₂₄-Aryl, C₆-C₂₄-Heteroaryl, z. B. Pyridyl, Furyl oder Chinolyl, C₇-C₃₀-Arylalkyl, C₇-C₃₀-Alkylaryl, fluorhaltiges C₁-C₂₅-Alkyl, fluorhaltiges C₆-C₂₄-Aryl, fluorhaltiges C₇-C₃₀-Arylalkyl, fluor-haltiges C₇ C₃₀-Alkylaryl oder C₁ C₁₂-Alkoxy ist, oder zwei oder mehrere Reste R² können so miteinander verbunden sein, daß die Reste R² und die sie verbindenden Atome des Cyclopentadienylringes ein C₄-C₂₄-Ring-system bilden, welches seinerseits substituiert sein kann, und
m gleich 5 für v = 0, und m gleich 4 für v = 1 ist,
- L¹: gleich oder verschieden sein können und ein Wasserstoff-atom, ein C₁-C₂₀-Kohlenwasseretoffrest wie C₁-C₁₀-Alkyl oder C₆-C₂₀-Aryl, ein Halogenatom, oder OR⁶, SR⁶, OSiR₃⁶, SiR₃⁶, PR₂⁶ oder NR₂⁶ bedeuten, worin R⁶ ein Halogenatom, eine C₁-C₁₀ Alkylgruppe, eine halogenierte C₁-C₁₀-Alkyl-gruppe, eine C₆-C₂₀-Arylgruppe oder eine halogenierte C₆-C₂₀- Arylgruppe sind, oder L¹ sind eine Toluolsulfonyl-, Trifluoracetyl-, Trifluoracetoxyl-, Trifluormethansulfonyl-, Nonafluorbutansulfonyl- oder 2,2,2-Trifluor-ethansulfonyl-Gruppe,
- o: eine ganze Zahl von 1 bis 4, bevorzugt 2 ist,
- Z: ein verbrückendes Strukturelement zwischen den beiden Cyclopentadienylringen bezeichnet und v ist 0 oder 1.

Beispiele für Z sind Gruppen (M²R⁴R⁵)ₓ, worin M² Kohlenstoff, Silizium, Germanium oder Zinn ist, x gleich 1, 2 oder 3 ist, und R⁴ und R⁵ gleich oder verschieden ein Wasserstoffatom oder eine C₁-C₂₀-kohlenwasserstoffhaltige Gruppe wie C₁-C₁₀-Alkyl, C₆-C₁₄-Aryl oder Trimethylsilyl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂. Z kann auch mit einem oder mehreren Resten R¹ und/oder R² ein mono- oder polycyclisches Ringsystem bilden.

Exemplarische aber nicht limitierende Beispiele für Metallocen-Katalysatorkomponenten sind:
Bis(cyclopentadienyl)titandichlorid
Bis(indenyl)titandichlorid
Bis(fluorenyl)titandichlorid
Bis(tetrahydroindenyl)titandichlorid
Bis(pentamethylcyclopentadienyl)titandichlorid
Bis(trimethylsilylcyclopentadienyl)titandichlorid
Bis(trimethoxysilylcyclopentadienyl)titandichlorid
Bis(isobutylcyclopentadienyl)titandichlorid
Bis(3-butenylcyclopentadienyl)titandichlorid
Bis(methylcyclopentadienyl)titandichlorid
Bis(1-,3-di-tert.butylcyclopentadienyl)titandichlorid
Bis(trifluoromethylcyclopentadienyl)titandichlorid
Bis(tert.butylcyclopentadienyl)titandichlorid
Bis(n-butylcyclopentadienyl)titandichlorid
Bis(phenylcyclopentadienyl)titandichlorid
Bis(N,N-dimethylaminomethyl-cyclopentadienyl)titandichlorid
Bis(1,3-dimethylcyclopentadienyl)titandichlorid
Bis(1-methyl-3-n-butylcyclopentadienyl)titandichlorid
(Cyclopentadienyl)(methylcyclopentadienyl)titandichlorid
(Cyclopentadienyl)(n-butylcyclopentadienyl)titandichlorid
(Methylcyclopentadienyl)(n-butylcyclopentadienyl) titandichlorid
(Cyclopentadienyl)(1-methyl-3-n-butylcyclopentadienyl)titandichlorid
Methylenbis(cyclopentadienyl)titandichlorid
Methylenbis(3-methylcyclopentadienyl)titandichlorid
Methylenbis(3-n-butylcyclopentadienyl)titandichlorid
Methylenbis (indenyl) titandichlorid
Methylenbis(tetrahydroindenyl)titandichlorid
Dimethylsilandiylbis(cyclopentadienyl)titandichlorid
Dimethylsilandiylbis(tetramethylcyclopentadienyl)titandichlorid
Dimethylsilandiylbis(3-trimethylsilylcyclopentadienyl)titandichlorid
Dimethylsilandiylbis(3-methylcyclopentadienyl)titandichlorid
Dimethylsilandiylbis(3-n-butylcyclopentadienyl)titandichlorid
Dimethylsilandiylbis(indenyl)titandichlorid
Dimethylsilandiylbis(tetrahydroindenyl)titandichlorid
Isopropylidenbis(cyclopentadienyl)titandichlorid
Isopropylidenbis(3-trimethylsilylcyclopentadienyl)titandichlorid
Isopropylidenbis(3-methylcyclopentadienyl)titandichlorid
Isopropylidenbis(3-n-butylcyclopentadienyl)titandichlorid
Isopropylidenbis(3-phenylcyclopentadienyl)titandichlorid
Isopropylidenbis(indenyl)titandichlorid
Isopropylidenbis(tetrahydroindenyl)titandichlorid
1,2-Ethandiylbis(cyclopentadienyl)titandichlorid
1,2-Ethandiylbis(3-methylcyclopentadienyl)titandichlorid
1,2-Ethandiylbis(3-n-butylcyclopentadienyl)titandichlorid
1,2-Ethandiylbis(3-phenylcyclopentadienyl)titandichlorid
1,2-Ethandiylbis(indenyl)titandichlorid
1,2-Ethandiylbis(tetrahydroindenyl)titandichlorid
[(Cyclopentadienyldimethylsilyl)(phenyl)amido]titandichlorid
[(Cyclopentadienyldimethylsilyl)(methyl)amido]titandichlorid
[(Cyclopentadienyldimethylsilyl)(tert.-butyl)amido]titandichlorid
[(Cyclopentadienyldimethylsilyl)(cyclohexyl)amido]titandichlorid
Bis(cyclopentadienyl)zirkoniumdichlorid
Bis(indenyl)zirkoniumdichlorid
Bis(fluorenyl)zirkoniumdichlorid
Bis(tetrahydroindenyl)zirkoniumdichlorid
Bis(1,3-ditert.butylcyclopentadienyl)zirkoniumdichlorid
Bis(tetramethylcyclopentadienyl)zirkoniumdichlorid
Bis(trimethylsilylcyclopentadienyl)zirkoniumdichlorid
Bis(trimethoxysilylcyclopentadienyl)zirkoniumdichlorid
Bis(isobutylcyclopentadienyl)zirkoniumdichlorid
Bis(3-butenylcyclopentadienyl)zirkoniumdichlorid
Bis(methylcyclopentadienyl)zirkoniumdichlorid
Bis(trifluoromethylcyclopentadienyl)zirkoniumdichlorid
Bis(tert.butylcyclopentadienyl)zirkoniumdichlorid
Bis(n-butylcyclopentadienyl)zirkoniumdichlorid
Bis(phenylcyclopentadienyl)zirkoniumdichlorid
Bis(1,3-dimethylcyclopentadienyl)zirkoniumdichlorid
Bis(1-methyl-3-n-butylcyclopentadienyl)zirkoniumdichlorid
(Cyclopentadienyl)(methylcyclopentadienyl)zirkoniumdichlorid
(Cyclopentadienyl) (n-butylcyclopentadienyl)zirkoniumdichlorid
(Methylcyclopentadienyl) (n-butylcyclopentadienyl)zirkoniumdichlorid
(Cyclopentadienyl)(1-methyl-3-n-butylcyclopentadienyl)zirkoniumdichlorid
Methylenbis(cyclopentadienyl)zirkoniumdichlorid
Methylenbis(3-methylcyclopentadienyl)zirkoniumdichlorid
Methylenbis(3-n-butylcyclopentadienyl)zirkoniumdichlorid
Methylenbis(indenyl)zirkoniumdichlorid
Methylenbis(tetrahydroindenyl)zirkoniumdichlorid
Dimethylsilandiylbis(cyclopentadienyl)zirkoniumdichlorid
Dimethylsilandiylbis(tetramethylcyclopentadienyl)zirkoniumdichlorid
Dimethylsilandiylbis(3-trimethylsilylcyclopentadienyl)zirkoniumdichlorid
Dimethylsilandiylbis(3-methylcyclopentadienyl)zirkoniumdichlorid
Dimethylsilandiylbis(3-n-butylcyclopentadienyl)zirkoniumdichlorid
Dimethylsilandiylbis(indenyl)zirkoniumdichlorid
Dimethylsilandiylbis(tetrahydroindenyl)zirkoniumdichlorid
Isopropylidenbis(cyclopentadienyl)zirkoniumdichlorid
Isopropylidenbis(3-trimethylsilylcyclopentadienyl)zirkoniumdichlorid
Isopropylidenbis(3-methylcyclopentadienyl)zirkoniumdichlorid
Isopropylidenbis(3-n-butylcyclopentadienyl)zirkoniumdichlorid
Isopropylidenbis(3-phenylcyclopentadienyl)zirkoniumdichlorid
Isopropylidenbis(indenyl)zirkoniumdichlorid
Isopropylidenbis(tetrahydroindenyl)zirkoniumdichlorid
1,2-Ethandiylbis(cyclopentadienyl)zirkoniumdichlorid
1,2-Ethandiylbis(3-methylcyclopentadienyl)zirkoniumdichlorid
1,2-Ethandiylbis(3-n-butylcyclopentadienyl)zirkoniumdichlorid
1,2-Ethandiylbis(3-phenylcyclopentadienyl)zirkoniumdichlorid
1,2-Ethandiylbis(indenyl)zirkoniumdichlorid
1,2-Ethandiylbis(tetrahydroindenyl)zirkoniumdichlorid
Bis(cyclopentadienyl)hafniumdichlorid
Bis(trimethylsilylcyclopentadienyl)hafniumdichlorid
Bis(methylcyclopentadienyl)hafniumdichlorid
Bis(n-butylcyclopentadienyl)hafniumdichlorid
Bis(1-,3-dimethylcyclopentadienyl)hafniumdichlorid
Methylenbis(cyclopentadienyl)hafniumdichlorid
Methylenbis(3-n-butylcyclopentadienyl)hafniumdichlorid
Dimethylsilandiylbis(cyclopentadienyl)hafniumdichlorid
Dimethylsilandiylbis(3-methylcyclopentadienyl)hafniumdichlorid
Dimethylsilandiylbis(3-n-butylcyclopentadienyl)hafniumdichlorid
Isopropylidenbis(cyclopentadienyl) hafniumdichlorid
1,2-Ethandiylbis(cyclopentadienyl)hafniumdichlorid
1,2-Ethandiylbis(3-methylcyclopentadienyl)hafniumdichlorid
1,2-Ethandiylbis(3-n-butylcyclopentadienyl)hafniumdichlorid
[(Cyclopentadienyldimethylsilyl)(phenyl)amido]zirkoniumdichlorid
[(Cyclopentadienyldimethylsilyl)(methyl)amido]zirkoniumdichlorid
[(Cyclopentadienyldimethylsilyl)(tert.-butyl)amido]zirkoniumdichlorid
[(Cyclopentadienyldimethylsilyl)(cyclohexyl)amido]zirkoniumdichlorid
1-Silacyclopentan-1,1-bis(indenyl)zirkoniumdichlorid
1,6-Bis[methylsilylbis(indenyl)zirkoniumdichlorid]hexan
1,4-Disila-1,4-bis[cyclopentadienylzirkoniumdichlorid]cyclohexan
1,4-Disila-1,4-bis[cyclopentadienyltitandichlorid]cyclohexan

Weitere Beispiele sind die entsprechenden Metallocen-Verbindungen, in welchen einer oder beide der Chlorid-Liganden gegen Bromid, Iodid oder Methyl ausgetauscht sind.

Als Katalysatorkomponente auf Basis eines späten Übergangsmetalls enthält die erfindungsgemäße Katalysatorzusammensetzung bevorzugt eine Nickel-, Rhodium-, Platin-, Eisen-, Ruthenium-, Kobalt- oder Palladiumverbindung, besonders bevorzugt eine Nickel-, Eisenoder Palladiumverbindung. Die späte Übergangsmetallverbindung enthält ausschließlich oder in Kombination mit anderen Liganden, solche Liganden welche über mehr als zwei Atome chelatisierend an das Metall koordinieren. Bevorzugt handelt es sich bei den beiden koordinierenden Atomen um Stickstoffatome. Besonders bevorzugt sind Liganden der folgenden Formel II.

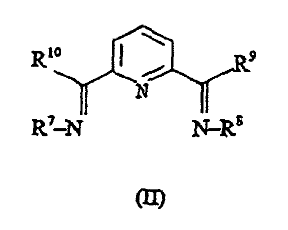

Hierin sind R⁷ und R⁸ sind unabhängig voneinander gleich oder verschieden C₁-C₄₀-Kohlenwasserstoffreste, in welchen vorzugsweise das am Stickstoffatom gebundene Kohlenstoffatom mit mindestens zwei weiteren Kohlenstoffatomen verbunden ist. Bevorzugt sind R⁷ und R⁹ C₆-C₂₀-Arylreste, die vorzugsweise in beiden orthoStellungen substituiert sind, z. B. mit C₁-C₁₀-Alkylresten wie Methyl oder Isopropyl. R⁹ und R¹⁰ sind unabhängig voneinander gleich oder verschieden ein Wasserstoffatom oder ein C₁-C₄₀-Kohlenwasserstoffrest, wie C₁-C₂₀-Alkyl oder C₆-C₂₀-Aryl, oder R⁹ und R¹⁰ bilden zusammen ein Ringsystem.

Außerdem bevorzugt sind Eisen-, Ruthenium-, Cobalt- oder Rhodiumkatalysatoren mit Liganden der Formel II.

Es kann die späte Übergangsmetallkomponente bereits den am Metall koordinierenden Liganden enthalten oder sie kann durch Kombination einer geeigneten Übergangsmetallkomponente mit dem freien Liganden oder einem Ligandenderivat "in situ" (d.h. im Polymerisationsreaktor) hergestellt werden.

Die beispielhaften späten Übergangsmetallverbindungen sind:
[2,6-{(2,6-ⁱPr₂C₆H₃)-N=C(Me)}pyridyl]FeBr₂
[2,6-{(2,6-Me₂C₆H₃)-N=C(Me)}pyridyl]FeBr₂
[2,6-{(2,6-ⁱPr₂C₆H₃)-N=C(Me)}pyridyl]CoBr₂
[2,6-{(2,6-Me₂C₆H₃)-N=C(Me)}pyridyl]CoBr₂
[2,6-{(2,6-ⁱPr₂C₆H₃)-N=C(Me)}pyridyl]FeBr₃
[2,6-{(2,6-Me₂C₆H₃)-N=C(Me)}pyridyl]FeBr₃
[2,6-{(2,6-ⁱPr₂C₅H₃)-N=C(Me)}pyridyl]CoBr₃
[2,6-{(2,6-Me₂C₆H₃)-N=C(Me)}pyridyl]CoBr₃

Anstelle der aufgeführten Dibromide können auch die entsprechenden Verbindungen, in welchen einer oder beide der Bromid-Liganden durch Chlorid, Iodid oder Methyl ersetzt sind, verwendet werden.

Bevorzugt enthält die erfindungsgemäße Katalysatorzusammensetzung einen oder mehrere Aktivatoren wie Lewis-Säuren.

Als lewis-saure Aktivatoren werden bevorzugt Borverbindungen wie Borane oder Aluminiumverbindungen wie Aluminiumalkyle oder Aluminoxane eingesetzt. Beispiele für geeignete Aktivatoren sind Borane wie Trifluoroboran, Triphenylboran, Tris(4 fluorophenyl)boran, Tris(3,5 difluorophenyl)boran, Tris(4 fluoromethylphenyl)boran, Tris(pentafluorophenyl)boran, Tris(tolyl)boran, Tria(3,5 dimethylphenyl)boran, Tris(3,5 difluorophenyl)boran, Tris(3,4,5 trifluorophenyl)boran oder Dimethylanilinium [(pentafluorophenyl)boran], [H(OEt₂)][B{3,5-(CF₃)₂C₆F₃}₄], Aluminiumalkyle wie Al(C₂H₅)₃, Al(CH₂CH(CH₃)₂)₃, Al(C₃H₇)₃, Al((CH₂)₃CH₃)₃, Al((CH₂)₅CH₃)₃, Al(C₆F₅)₃, Al(C₂H₅)₂Cl, Al₂(C₂H₅)₃Cl₂ oder AlCl₃, oder Aluminoxane wie Methylaluminoxan, Isobutylaluminoxan, Butylaluminoxan, Heptylaluminoxan und Methylbutylaluminoxan. Insbesondere bevorzugt werden Aluminoxane eingesetzt.

Der Aktivator kann in beliebigen Mengen bezogen auf die Übergangsmetall-Komponenten der erfindungsgemäßen Katalysatorzusammensetzung eingesetzt werden, bevorzugt wird er in einem Überschuß oder in stöchiometrischen Mengen eingesetzt. Für die Aktivierung der frühen und der späten Übergangsmetall-Komponente der Katalysatorzusammensetzung kann der gleiche Aktivator, oder unterschiedliche Aktivatoren verwendet werden. Bevorzugt wird für alle Übergangsmetallkomponenten der gleiche Aktivator verwendet. Die Aktivierung der verschiedenen Übergangsmetallkomponenten kann am gleichen Ort erfolgen, z. B. im Reaktor, oder an unterschiedlichen Orten. In einer bevorzugten Ausführungsvariante wird ein Überschuß des Aktivators mit der frühen Übergangsmetall-Komponente gemischt, und diese Mischung zu der bereits mit dem Monomer kontaktierten späten Übergangsmetallkomponente gegeben.

Als Aktivator für die Katalysatorkomponente auf Basis eines späten Übergangsmetalls wird bevorzugt ein Aluminoxan eingesetzt.

Als Aktivator für die Katalysatorkomponente auf Basis eines frühen Übergangsmetalls wird im Fall einer Ziegler-Katalyeatorkomponente bevorzugt ein Aluminiumalkyl und im Fall einer Metallocen-Katalysatorkomponente bevorzugt ein Aluminoxan und/oder ein Boran eingesetzt.

Optional enthält die erfindungsgemäße Katalysatorzusammensetzung eine oder mehrere Trägerkomponenten. In diesem Fall können sowohl die frühe wie auch die späte Übergangsmetallkomponente geträgert sein, oder es kann nur eine der beiden Komponenten geträgert sein. In einer bevorzugten Ausführungsvariante sind beide Komponenten geträgert, um eine relative räumliche Nähe der verschiedenen Katalysatorzentren sicherzustellen und somit eine gute Durchmischung der unterschiedlichen gebildeten Polymere zu gewährleisten.

Die Trägerkomponente ist bevorzugt ein poröser anorganischer oder organischer Feststoff. Bevorzugt enthält das Trägermaterial mindestens ein anorganisches Halogenid wie MgCl₂ oder ein anorganisches Oxid wie SiO₂, Al₂O₃, MgO, ZrO₂, TiO₂, B₂O₃, CaO, ZnO, ThO₂, Carbonate wie z. B. Na₂CO₃, K₂CO₃, CaCO₃, MgCO₃, Sulfate, wie Na₂SO₄, Al₂(SO₄)₃, BaSO₄, Nitrate wie z. B. KNO₃, Mg(NO₃)₂, Al(NO₃)₃ sowie Oxide wie Na₂O, K₂O, Li₂O insbesondere Siliziumoxid und/oder Aluminiumoxid oder es enthält bevorzugt mindestens ein Homo- oder Copolymer, welches vernetzt sein kann, z. B. Polyethylen, Polypropylen, Polybuten, Polystyrol, mit Divinylbenzol vernetztes Polystyrol, Polyvinylchlorid, Acryl-Butadien-Styrol-Copolymer, Polyamid, Polymethacrylat, Polycarbonat, Polyester, Polyacetal oder Polyvinylalkohol. Auch Polymerblends können verwendet werden.

Das Trägermaterial kann vorbehandelt sein, z. B. durch Erhitzen bei Temperaturen von 50 °C bis 1000 °C, z. B. im Inertgasstrom oder im Vakuum bei 0,01 bar bis 0,001 bar, oder durch Mischung oder Umsetzung mit einer chemischen Verbindung. Die chemische Verbindung kann mit Katalysatorgiften wie Aluminium-, Magnesium-, Bor- oder Lithiumalkylen reagieren oder zu einer Funktionalisierung der Oberfläche des Trägers führen. Dabei ist es unerheblich, ob das Trägermaterial bereits funktionelle Gruppen trägt oder diese erst nach der Vorbehandlung durch entsprechende Reaktionen auf der Oberfläche eingeführt werden.

Die Trägerung kann vorgenommen werden, indem die einzelnen Katalysatorkomponenten in beliebiger Reihenfolge gemischt werden. So kann z. B. die frühe und die späte Übergangsmetallverbindung auf den optimal vorbehandelten Träger (z. B. aus SiO₂) aufgebracht werden und anschließend mit dem Aktivator versetzt werden, vorzugsweise in Gegenwart von Monomer.

Die vorliegende Erfindung bezieht sich weiterhin auf ein Verfahren zur Polymerisation von Olefinen in Gegenwart der erfindungsgemäßen Katalysatorzusammensetzung. Der Begriff Polymerisation umfaßt eine Homopolymerisation wie auch eine Copolymerisation.

Das erfindungsgemäße Katalysatorsystem kann zur Umsetzung von einem oder mehreren olefinischen Comonomeren wie Ethylen oder C₃-C₂₀-α-Olefinen eingesetzt werden. Für den Fall, daß zwei oder mehr Comonomere eingesetzt werden, können die frühe und die späte Übergangsmetallkomponenten für alle eingesetzten Monomeren aktiv sein, jedoch kann auch eine Übergangsmetallkomponente spezifisch nur eines oder mehrere der eingesetzten Monomere umsetzen. Beispielsweise können Ethylen und ein α-Olefin, welches vorzugsweise 3 bis 20 C-Atome aufweist, eingesetzt werden. Dabei wird ein Gemisch zweier Copolymere erhalten, oder ein Gemisch eines Copolymers mit einem Ethylen-Homopolymer. Bevorzugt wird das Copolymer mit dem geringeren α-Olefin-Anteil von der späten Übergangsmetallkomponente gebildet. Besonders bevorzugt wird in den erfindungsgemäßen Verfahren Ethylen homopolymerisiert, wobei ein Blend Mindestens zwei verschiedener Polyethylene erhalten wird, die eine verschiedene Verzweigungsstruktur aufweisen.

Das Polymerisationsverfahren kann in flüssiger Phase oder in der Gasphase durchgeführt werden. Bevorzugt erfolgt das Verfahren in flüssiger Phase. Als Lösungs- bzw. Suspensionsmittel werden bevorzugt inerte organische Verbindungen eingesetzt. Besonders bevorzugt werden aromatische oder aliphatische Kohlenwasserstoffe oder deren Gemische eingesetzt. Besonders geeignet sind Toluol, Xylole sowie gesättigte aliphatische C₁₀-C₃₀-Kohlenwasserstoffe. Das Verfahren kann auch in überkritischen Medien durchgeführt werden.

Das Polymerisationsverfahren wird im Temperaturbereich von -100 bis 300°C, bevorzugt 0 bis 200 °C, besonders bevorzugt 25 bis 150°C durchgeführt. Das Verfahren wird im Druckbereich von 1 bis 300 atm, bevorzugt 1 bis 100 atm, besonders bevorzugt 3 bis 30 atm durchgeführt. Das Verfahren kann ein- oder mehrstufig erfolgen.

Durch die Wahl entsprechender Reaktionsbedingungen, z. B. Temperatur, Zusatz von Kettenüberträgern wie z. B. Wasserstoff, Monomerkonzentrationen, sowie die Katalysatorkonzentration können Molekulargewichtsverteilungen, Verzweigungsgrad und sonstige Eigenschaften der gebildeten Polymeren, gesteuert werden. Über die Konzentration der Monomere kann der Verzweigungsgrad der Polymere gesteuert werden. Die Umsetzung kann auch in zwei oder mehreren in Kaskade geschalteten Reaktoren erfolgen. Durch Zuführen der Katalysatorkomponenten in die einzelnen Reaktoren kann das Verhältnis der beiden Katalysatoren geändert werden.

Die Produktivität jeder einzelnen Übergangsmetallkomponente liegt vorzugsweise oberhalb von 2.800 kg Polymer/(mol Übergangsmetall x h), besonders bevorzugt oberhalb von 15.000 kg Polymer/(mol Übergangemetall x h).

Die erfindungsgemäße Katalysatorzusammensetzung eignet sich zur Herstellung von Reaktorblends zweier oder mehrerer Polymere, welche vorteilhafte Anwendungs- und Verarbeitungseigenschaften besitzen. Die zahlenmittleren Molmassen der einzelnen Polymerfraktionen liegen bevorzugt im Bereich von 11 bis 10.000 kg/mol, besonders bevorzugt 20 bis 1.000 kg/mol. Das molare Verhältnis der Anteile der frühen Übergangsmetallkomponente(n) zur späten Übergangsmetallkomponente(n) kann im Bereich von 0,1 : 99,9 bis 99,9 : 0,1 liegen, bevorzugt 1 : 30 bis 1 : 1. Das Verhältnis der Anteile der durch den frühen und der durch den späten Übergangsmetallkatalysator gebildeten Polymere kann im Bereich von 5 0,1 : 99,9 bis 99,9 : 0,1 liegen, bevorzugt 10 : 90 bis 90 : 10, besonders bevorzugt 1 : 1 bis 50 : 1.

Das erfindungsgemäße Polymerisationsverfahren ist besonders geeignet zur Homopolymerisation von Ethylen zu einem Blend zweier oder mehrerer Polymere, von denen mindestens eines die folgende Verzweigungsstruktur aufweist: Es enthält mindestens 10 Verzweigungen je 1000 Kohlenstoffatomen, und je 100 Methylverzweigungen sind mindestens zwei Ethyl-, mindestens eine Butyl- und eins bis fünfzig Amyl- oder höhere Verzweigungen enthalten.

Das erfindungsgemäße Polymerisationsverfahren ist besonders bevorzugt geeignet zur Polymerisation von Ethylen zu einem Blend zweier oder mehrerer Polymere, von denen mindestens eines die folgende Verzweigungsstruktur aufweist: Es enthält mindestens 30 Verzweigungen je 1000 Kohlenstoffatomen, und je 100 Methylverzweigungen sind mindestens vier Ethyl-, mindestens zwei Butylund zwei bis dreißig Amyl- oder höhere Verzweigungen enthalten.

Insbesondere kann ein Reaktorblend zweier Polyethylene erhalten werden, von denen vorzugsweise eines einen Verzweigungsgrad von > 10 Verzweigungen/1000 Kohlenstoffatome, vorzugsweise > 20 Verzweigungen/1000 Kohlenstoffatomen, besonders bevorzugt > 40 Verzweigungen/1000 Kohlenstoffatomen enthält.

Die Herstellung des Polymer-Blends bereits im Reaktor, verringert den Energieverbrauch, erfordert keine nachträglichen Blend-Prozesse und ermöglicht eine einfache Kontrolle der Molekulargewichtsverteilungen, und der Molekulargewichtsfraktionen der verschiedenen Polymere. Zudem kann eine gute Durchmischung der Polymere erreicht werden. Die Herstellung eines Blende zweier oder mehrerer Polymere von unterschiedlichem Verzweigungsgrad aus Ethylen ohne Zusatz eines Comonomers verringert die Kosten der eingesetzten Olefine, sowie die Anlagen- und sonstigen Kosten zur Bereitstellung des Comonomers.

## Patentansprüche

1. Katalysatorzusammensetzung enthaltend mindestens zwei verschiedene Polymerisationskatalysatoren, von denen a) mindestens einer ein Polymerisationskatalysator auf Basis einer frühen Übergangsmetallkomponente ist, wobei das frühe Übergangsmetall ein Metall der Gruppen IIIA bis VIIA des Periodensystems der Elemente oder ein Metall der Gruppe der Lanthanoiden ist und b) mindestens einer ein Polymerisationskatalysator auf Basis einer späten Übergangsmetallkomponente ist, enthaltend ausschliesslich oder in Kombination mit anderen Liganden, solche Liganden, welche über mehr als zwei Atome chelatisiert an das Metall koordinieren und wobei das späte Übergangsmetall ein Metall der Gruppen VIIIA und IB des Periodensystems der Elemente ist.

2. Katalysatorzusammensetzung gemäß Anspruch 1, worin die frühe Übergangsmetallkomponente eine Ziegler-Katalysatorkomponente und/oder eine Metallocenkatalysatorkomponente ist.

3. Katalysatorkomponente gemäß Anspruch 1 oder 2, worin jede der Übergangsmetallkomponenten eine Produktivität aufweist, die größer ist als 2800 kg Polymer/(mol Übergangsmetall x. h).

4. Katalysatorzusammensetzung gemäß einem oder mehreren der Ansprüche 1 bis 3, zusätzlich enthaltend einen oder mehrere Aktivatoren.

5. Katalysatorzusammensetzung gemäß einem oder mehreren der Ansprüche 1 bis 4, zusätzlich enthaltend einen oder mehrere Träger.

6. Verfahren zur Polymerisation von Olefinen in Gegenwart einer Katalysatorzusammensetzung gemäß einem oder mehreren der Ansprüche 1 bis 5.

7. Verfahren gemäß Anspruch 6, worin Ethylen polymerisiert wird.

8. Verwendung einer Katalysatorzusammensetzung gemäß einem oder mehreren der Ansprüche 1 bis 5 zur Olefinpolymerisation.

## Claims

1. A catalyst composition comprising at least two different polymerization catalysts of which a) at least one is a polymerization catalyst based on an early transition metal component, where the early transition metal is a metal of groups IIIA to VIIA of the Periodic Table of the Elements or a metal of the lanthanide group, and b) at least one is a polymerization catalyst based on a late transition metal component, containing exclusively or in combination with other ligands, ligands which coordinate to the metal in a chelating fashion via more than two atoms, where the late transition metal is a metal of groups VIIIA and IB of the Periodic Table of the Elements.

2. A catalyst composition as claimed in claim 1, wherein the early transition metal component is a Ziegler catalyst component and/or a metallocene catalyst component.

3. A catalyst composition as claimed in claim 1 or 2, wherein each of the transition metal components has a productivity which is greater than 2800 kg of polymer/(mole of transition metal x h).

4. A catalyst composition as claimed in one or more of claims 1 to 3 further comprising one or more activators.

5. A catalyst composition as claimed in one or more of claims 1 to 4 further comprising one or more supports.

6. A process for the polymerization of olefins in the presence of a catalyst composition as claimed in one or more of claims 1 to 5.

7. A process as claimed in claim 6 in which ethylene is polymerized.

8. The use of a catalyst composition as claimed in one or more of claims 1 to 5 for olefin polymerization.

## Revendications

1. Composition de catalyseur contenant au moins deux catalyseurs de polymérisation différents, parmi lesquels a) au moins l'un est un catalyseur de polymérisation à base d'un composant de métal de transition antérieur, tandis que le métal de transition antérieur est un métal des groupes IIIA à VIIA de la classification périodique des éléments ou un métal du groupe des lanthanoïdes, et b) au moins l'un est un catalyseur de polymérisation à base d'un composant de métal de transition ultérieur, contenant exclusivement ou en combinaison avec d'autres ligands des ligands sont coordinés par chélation au métal par l'intermédiaire de plus de deux atomes, et tandis que le métal de transition ultérieur est un métal des groupes VIIIA et IB de la classification périodique des éléments.

2. Composition de catalyseur selon la revendication 1, dans laquelle le composant de métal de transition antérieur est un composant de catalyseur de Ziegler et/ou un composant de catalyseur au métallocène.

3. Composant de catalyseur selon la revendication 1 ou 2, dans laquelle chacun des composants de métal de transition présente une productivité qui est supérieure à 2800 kg de polymère/(mol de métal de transition x h).

4. Composition de catalyseur selon l'une ou plusieurs des revendications 1 à 3, contenant en outre un ou plusieurs activateurs.

5. Composition de catalyseur selon l'une ou plusieurs des revendications 1 à 4, contenant en outre un ou plusieurs supports.

6. Procédé pour la polymérisation d'oléfines en présence d'une composition de catalyseur selon l'une ou plusieurs des revendications 1 à 5.

7. Procédé selon la revendication 6, dans lequel on polymérise de l'éthylène.

8. Utilisation d'une composition de catalyseur selon l'une ou plusieurs des revendications 1 à 5 pour la polymérisation d'oléfines.
